# EUROPÄISCHE PATENTSCHRIFT

(11) **EP 1 417 898 B1**
(45) Veröffentlichungstag und Bekanntmachung des Hinweises auf die Patenterteilung: **18.11.2009**
(21) Anmeldenummer: 03019680.2
(22) Anmeldetag: 09.09.2003
(51) Int. Cl.: A23L 2/04

(54) **Verfahren zur Gewinnung von Fruchtfasern**
Method to produce fibrous fractions of fruits
Procédé de production de la fraction fibreuse des fruits

(30) Priorität: 05.11.2002 DE 10251456
(43) Veröffentlichungstag der Anmeldung: 12.05.2004
(73) Patentinhaber: Bayernwald Früchteverwertung GmbH, 94491 Hengersberg (DE)
(72) Erfinder: Beisswenger, Armin, 94541 Grattersdorf (DE); Kohlhofer, Peter Dipl.-Ing., 94327 Bogen (DE); Sipos, Stefan Dr., 94491 Hengersberg (DE)
(74) Vertreter: Held, Stephan

(56) Entgegenhaltungen:
- EP-A- 1 038 975
- DE-B- 1 022 892
- US-A- 5 031 522

## Beschreibung

Die Erfindung betrifft ein Verfahren nach dem Oberbegriff des Anspruchs 1 zur Gewinnung von Kernen und Fruchtfasern aus Fruchttrester und/oder Maische. Ferner betrifft die Erfindung verschiedene Endprodukte, die nach dem erfindungsgemäßen Verfahren gewonnene Fruchtfasern enthalten.

Vor der eigentlichen Verarbeitung von Obst und Beeren müssen die ganzen Früchte einem Zerkleinerungsprozess unterzogen werden, aus dem die sogenannte Maische resultiert. Dieser Zerkleinerungsprozess kann durch mechanische (Obstmühlen), thermische (Thermobreak, Gefrieren), enzymatische (Enzymfermentierung) oder unkonventionelle Verfahren (Ultraschall, Elektroplasmolyse) erfolgen. Die hierdurch entstehende Fruchtmaische beinhaltet in Abhängigkeit von der jeweils verarbeiteten Fruchtart alle ursprünglichen Fruchtbestandteile, wie zum Beispiel Schaltenteile, Kerne Fruchtfleisch und Saft, sowie entsprechende Fruchtinhaltsstoffe.

Bei der Saft- bzw. Markherstellung aus Obst und Beeren fallen nach dem Pressen oder dem Passieren der Fruchtmaische große Mengen sogenannten Fruchttresters an, der aus den nach dem Saftpressen bzw. Passieren im Obst und in den Beeren ursprünglich enthaltenen Kernen, Schalenresten und Fruchtfasern besteht.

Bisher wurde der Fruchttrester kompostiert und getrocknet. In jüngster Zeit wird der Fruchttrester auch in Tierfutter eingemischt oder zum Betreiben von Biogasanlagen genutzt.

Nachteilig an dieser bisher üblichen Vorgehensweise ist jedoch, dass das Kompostieren oder Trocknen des Fruchttresters für den Einsatz als Futtermittel mit einem hohen technischen Aufwand und vergleichsweise hohem Energieeinsatz verbunden, während das Entsorgen von Fruchttrester in Biogasanlagen dem hohen ernährungsphysiologischen Wert des Fruchttresters nicht gerecht wird.

Aus diesem Grund wurde nach weiteren Verarbeitungsmöglichkeiten des Fruchttresters oder der Maische gesucht, die eine Verwendung der im Fruchttrester oder der Maische enthaltenen Fruchtfasern als Ballaststoffe für Endprodukte, welche für den menschlichen Verzehr geeignet sind, ermöglichen.

Bei einem bekannten Verfahren zur Gewinnung der Fruchtfasern wird der Fruchttrester zunächst getrocknet und anschließend die im Fruchttrester enthaltenen Kerne durch Windsichtung oder Siebung von den getrockneten Fruchtfasern im Fruchttrester getrennt. Dieses Verfahren hat jedoch den Nachteil, dass zunächst große Mengen an Energie für die Trocknung des Fruchttresters eingesetzt werden müssen und die dabei gewonnenen Fruchtfasern durch das Trocknen oftmals einen unangenehmen Nebengeruch oder Nebengeschmack aufweisen, der eine Verwendung der so gewonnenen Fruchtfasern für Lebensmittel allenfalls in eingeschränktem Umfang zuläßt.

Die US-A 5031522 offenbart ein Verfahren zur Saftgewinnung bei dem mittels einer Dekantierzentrifuge der Flüssige Anteil der Maische von den festen Bestandteilen abgetrennt wird.

Es ist Aufgabe der Erfindung, ein Verfahren zur Gewinnung von Kernen und Fruchtfasern anzugeben, durch dessen Einsatz die Fruchtfasern schonend und mit geringem Energieeinsatz von den Kernen getrennt werden können, wobei die Fruchtfasern ihren hohen ernährungsphysiologischen Wert zumindest annähernd beibehalten und in vielfältigsten Endprodukten einsetzbar sind.

Die Erfindung löst die Aufgabe durch ein Verfahren mit den Merkmalen nach Anspruch 1. Ferner löst die Erfindung die Aufgabe durch ein Endprodukt mit den Merkmalen nach Anspruch 13, das Fruchtfasern enthält, welche durch das erfindungsgemäße Verfahren hergestellt worden sind.

Die Neuartigkeit des erfindungsgemäßen Verfahrens liegt in der selektiven Trennung der einzelnen Fraktionen (fest/fest/flüssig-Trennung). So wird bei dem erfindungsgemäßen Verfahren vorgeschlagen, bei Verwendung von Fruchttrester diesen zunächst mit einer Flüssigkeit, gegebenenfalls unter Zugabe von Maische, aufzuschwemmen, um eine möglichst gleichmäßige Verteilung der Fruchtfasern und Kerne in dem dabei entstehenden Gemisch zu erzielen. Ferner wird durch das Aufschwemmen des Fruchttresters die Konzentration von Fruchtfasern und Kernen im Fruchttrester reduziert, so dass sich die Fruchtfasern und die Kerne bereits in der Flüssigkeit voneinander ansatzweise trennen. Bei Verwendung von Maische ist die Zugabe einer Flüssigkeit nicht zwingend erforderlich, jedoch grundsätzlich auch möglich. Anschließend werden die Kerne in einem ersten Trennschritt aus dem so gewonnenen Gemisch aus der Flüssigkeit und dem Fruchttrester bzw. direkt aus der Maische durch eine Nasstrennung abgetrennt. Dabei werden die Kerne durch die Nasstrennung besonders schonend und nahezu rückstandsfrei von den Fruchtfasern separiert, so dass in dem verbleibenden Restgemisch bzw. in der verbleibenden Restmaische einerseits keine Kerne mehr enthalten sind, während die Kerne andererseits keine anhaftenden Fruchtfasern mehr aufweisen. Im Anschluß wird das verbleibende Restgemisch bzw. die verbleibende Restmaische einer weiteren Nasstrennung zugeführt, in der die Fruchtfasern von der Flüssigkeit getrennt werden. Die dabei gewonnenen Fasern sind reich an Ballaststoffen und fruchteigenen Flavonoiden, welche sich hervorragend als wertsteigernde Zusätze in Endprodukten, wie Fruchtsäften, Pürees und ähnliches, eignen. Neben den positiven Wirkungen der Flavonoide (z.B. antioxydative Wirkung) ist die natürliche Matrix, in der sich die Inhaltsstoffe befinden, gegenüber isoliert eingebrachten Inhaltsstoffen hervorzuheben. Ferner zeigen die nach dem erfindungsgemäßen Verfahren gewonnenen Fruchtfasern verglichen mit den durch Trocknen gewonnenen Fruchtfasern keinerlei unangenehmen Nebengeschmack oder Nebengeruch.

Die beschriebene Vorgehensweise gilt im selben Umfang für Maische, welche als Vorstufe zur Herstellung von Obst- und Beerensäften benötigt wird als auch für Maische, welche für die Herstellung von Fruchtpürees herangezogen wird.

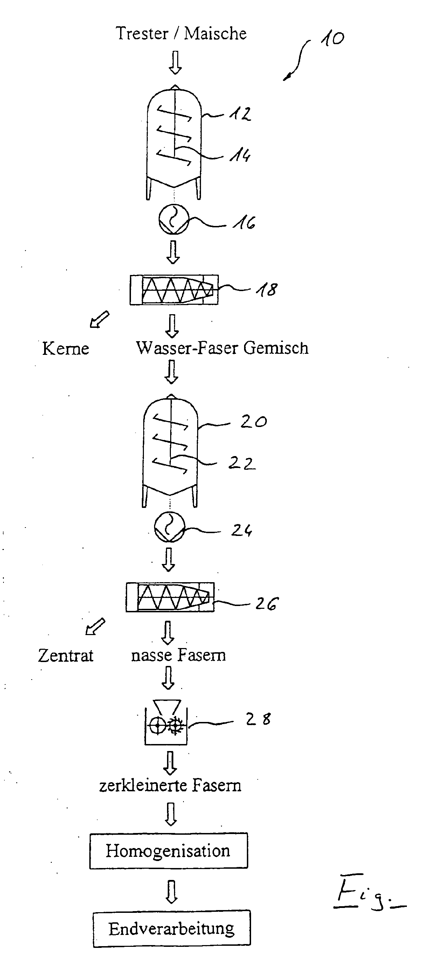

Weitere vorteilhafte Weiterbildungen der Erfindung ergeben sich aus der nachfolgenden Beschreibung, der Zeichnung sowie den Unteransprüchen.

Bei einer besonders bevorzugten Variante des erfindungsgemäßen Verfahrens wird vorgeschlagen, dass das Gemisch und/oder das Restgemisch bzw. die Maische und/oder die Restmaische zur Nasstrennung zentrifugiert wird. Durch das Zentrifugieren wird eine besonders schonende Trennung der Kerne vom Gemisch oder der Maische bzw. der Fruchtfasern von dem Restgemisch oder der Restmaische möglich, wobei die Struktur der Kerne sowie die Struktur der Fruchtfasern im wesentlichen erhalten bleibt und die in den Kernen enthaltenen Öle sowie die in den Fruchtfasern enthaltenen Flavonoide auch nach der Trennung unverändert vorliegen. Dabei hat sich in Versuchen gezeigt, dass eine besonders gute Trennleistung bei gleichzeitig besonders schonender Behandlung der Kerne und Fruchtfasern möglich ist, wenn zum Zentrifugieren eine Dekantierzentrifuge eingesetzt wird.

Um eine möglichst hohe, wirtschaftlich jedoch vertretbare Verdünnung des Fruchttresters zu erreichen, wird ferner vorgeschlagen, beim Aufschwemmen das Mischungsverhältnis zwischen dem Fruchttrester und der Flüssigkeit so einzustellen, dass das Mischungsverhältnis in einem Bereich von 1 : 1 bis 1 : 10 liegt. Sofern erforderlich, kann auch die Maische mit zusätzlicher Flüssigkeit versetzt werden.

Zum Aufschwemmen des Fruchttresters oder der Maische wird als Flüssigkeit vorzugsweise Wasser verwendet, das geschmacks- und geruchsneutral ist. Um Auswirkungen auf den Geschmack und unerwünschte Reaktionen im Gemisch oder Restgemisch zu vermeiden, ist es von besonderem Vorteil entmineralisiertes Wasser zu verwenden. Ferner ist es möglich, alternativ Fruchtsaft als Flüssigkeit zuzugeben.

Des weiteren ist es bevorzugt, den pH-Wert des Gemisches beim Aufschwemmen des Fruchttresters mit Wasser durch Zugabe mindestens einer organischen Säure einzustellen, so dass das Gemisch ein für die Weiterverarbeitung optimalen Säuregrad aufweist.

Um eine Sedimentation der in dem Gemisch oder im Restgemisch bzw. in der Maische oder in der Restmaische enthaltenen Bestandteile zu vermeiden, wird ferner vorgeschlagen, das Gemisch und/oder das Restgemisch bzw. die Maische und/oder die Restmaische zumindest unmittelbar vor der Nasstrennung beispielsweise in einem Mischtank umzuwälzen.

Die durch das erfindungsgemäße Verfahren gewonnenen Kerne werden nach der Nasstrennung vorzugsweise einer weiteren Verarbeitung zugeführt. So wird vorgeschlagen, die Kerne nach der Nasstrennung zu entölen. Da die Kerne durch die verhältnismäßig schonende Nasstrennung allenfalls zu einem geringen Teil aufgebrochen sind, können die in den Kernen enthaltenen Öle, gegebenenfalls nach einer Trocknung der Kerne, beispielsweise durch Pressen gewonnen werden. Diese wertvollen Öle finden dann ihre Anwendung in der Pharmazie oder der Kosmetik.

Die durch das erfindungsgemäße Verfahren gewonnenen Fruchtfasern werden vorzugsweise ohne Trocknung einer unmittelbaren Weiterverarbeitung zugeführt. Hierdurch wird vermieden, dass sich die Wirkbestandteile in den Fruchtfasern durch den Trocknungsprozeß zersetzen. So haben Versuche gezeigt, dass die ohne Trocknung weiter zu verarbeitenden Fruchtfasern im Gegensatz zu getrockneten Fruchtfasern keine unangenehmen Geschmacksoder Geruchseigenschaften besitzen.

Des weiteren wird vorgeschlagen die Fruchtfasern zur Weiterverarbeitung zunächst zu mahlen. Durch das Vermahlen der Fruchtfasern werden die Fruchtfasern vorzerkleinert und lassen sich so besser in das jeweilige Endprodukt einarbeiten.

Nach dem Mahlen der Fruchtfasern wird bei einer Weiterbildung dieser Verfahrensvariante vorgeschlagen, die gemahlenen Fruchtfasern zusätzlich zu homogenisieren, damit eine homogenisierte Masse aus Fruchtfasern für die weitere Verarbeitung vorliegt.

Besonders bevorzugt erfolgt die Endverarbeitung der Fruchtfasern, vorzugsweise nach dem sie gemahlen und homogenisiert worden sind, unmittelbar nach deren Gewinnung, so dass die in den Fruchtfasern enthaltenen Nähr- und Wirkstoffe nahezu unverändert im Endprodukt vorliegen.

Die durch das erfindungsgemäße gewonnenen Fruchtfasern lassen sich für vielfältige Endprodukte verwenden. So können die auf erfindungsgemäße Weise gewonnenen Fruchtfasern für die Herstellung von Faser-/Ballaststoffkonzentraten aus Früchten mit fruchteigenen Fruchtfasern, von trüben oder blanken Fruchtsäften mit fruchteigenen Fruchtfasern, von trüben oder blanken Fruchtsaftkonzentraten mit fruchteigenen Fruchtfasern, von Fruchtmark mit fruchteigenen Fruchtfasern, von Markkonzentraten mit fruchteigenen Fruchtfasern oder auch von Fruchtzubereitungen auf der Basis von Fruchtpürees mit fruchteigenen Fruchtfasern verwendet werden. Die erfindungsgemäßen Endprodukte eignen sich auch als natürliche Träger für lipophile Zusätze, wie zum Beispiel Vitamin E, Öle, Carotinoide, γ-Linolensäure und ähnliches.

Die Erfindung wird nachstehend anhand eines Ausführungsbeispiels mit Bezugnahme auf die beigefügte Zeichnung beschrieben.

In der Zeichnung zeigt die einzige Figur in schematischer Darstellung den Ablauf des erfindungsgemäßen Verfahrens anhand eine Anlage zur Durchführung des erfindungsgemäßen Verfahrens.

In der einzigen Figur ist eine Anlage 10 zur Durchführung des erfindungsgemäßen Verfahrens dargestellt. Die Anlage 10 weist einen ersten Tank 12 mit einem Rührwerk 14 auf, in den der zu verarbeitende Fruchttrester und/oder die zu verarbeitende Maische einzufüllen ist. Nach dem Befüllen des Tanks 12 oder während dessen Befüllen wird dem Fruchttrester und/oder der Maische entmineralisiertes Wasser oder Fruchtsaft in einem Mischungsverhältnis von 1 : 1 bis 1 : 10 sowie bei Verwendung von Fruchttrester mindestens eine organische Säure zur Einstellung des pH-Wertes des entstehenden Gemisches beigegeben. Das so entstehende Gemisch wird ständig mit dem Rührwerk 14 in Bewegung gehalten, um eine Sedimentation der im Gemisch enthaltenen Fruchtfasern und Kerne zu vermeiden.

Am ersten Tank 12 ist eine Exzenterschneckenpumpe 16 vorgesehen, die das Gemisch oder die Maische aus dem ersten Tank 12 in den Eintrittsbereich einer nachgeordneten ersten Dekantierzentrifuge 18 kontinuierlich oder intermittierend fördert.

Wie durch den Pfeil in der einzigen Figur angedeutet ist, werden in der ersten Dekantierzentrifuge 18 die spezifisch schwereren Kerne aus dem Gemisch aus Wasser und Fruchttrester oder der Maische abgetrennt, wobei je nach Fruchttyp die Dekantierzentrifuge 18 entsprechend eingestellt wird. Die aus dem Feststoffaustrag der Dekantierzentrifuge 18 geförderten Kerne werden für eine Weiterverarbeitung zunächst getrocknet und anschlieβend beispielsweise durch Pressen entölt, um das in den Kernen enthaltene Öl zu gewinnen.

Das aus dem Flüssigaustrag der ersten Dekantierzentrifuge 18 austretende Zentrat aus Fruchtfasern und Wasser bzw. Fruchtsaft wird in einen zweiten Tank 20 mit Rührwerk 22 geleitet, wie durch den zweiten Pfeil in der einzigen Figur symbolisiert ist. In dem zweiten Tank 20 wird das Zentrat mit Hilfe des Rührwerks 22 erneut umgewälzt. Nach dem Umwälzen wird das so homogenisierte Zentrat von einer zweiten Exzenterschneckenpumpe 24 in den Eintrittsabschnitt einer nachgeordneten zweiten Dekantierzentrifuge 26 gefördert.

In der zweiten Dekantierzentrifuge 26 erfolgt die Trennung der Fruchtfasern vom Wasser bzw. vom Fruchtsaft. Dabei erfolgt der Austrag der nassen Fruchtfasern aus dem Feststoffaustrag der zweiten Dekantierzentrifuge 26, wie durch den Pfeil in der einzigen Figur angedeutet ist. Die nassen Fruchtfasern werden anschließend einer Mühle 28 zugeführt. Alternativ können die ungemahlenen Fruchtfasern unmittelbar einer Endverarbeitung, beispielsweise zur Herstellung ballaststoffhaltiger Lebensmittel wie Ballaststoffriegel, unterzogen werden.

Das während des Zentrifugierens abgetrennte Wasser bzw. der abgetrennte Fruchtsaft wird als Zentrat aus dem Flüssigaustrag der Dekantierzentrifuge 26 abgeführt, wie durch den anderen Pfeil in der einzigen Figur angedeutet ist. Das Wasser wird beispielsweise einer Aufbereitungsanlage zugeführt, in der es gereinigt und für das Aufschwemmen weiteren Fruchttresters und/oder weiterer Maische in den ersten Tank 12 wieder zurückgeleitet wird. Der Fruchtsaft kann einer weiteren Verarbeitung zugeführt werden.

Nach dem Mahlen in der Mühle 28 können die zerkleinerten nassen Fruchtfasern gelagert werden und anschließend mittels Hochdruck-Homogenisation homogenisiert und für die Herstellung von Faser-/Ballaststoffkonzentraten aus Früchten mit fruchteigenen Fruchtfasern, von trüben oder blanken Fruchtsäften mit fruchteigenen Fruchtfasern, von trüben oder blanken Fruchtsaftkonzentraten mit fruchteigenen Fruchtfasern, von Fruchtmark mit fruchteigenen Fruchtfasern, von Markkonzentraten mit fruchteigenen Fruchtfasern oder auch von Fruchtzubereitungen auf der Basis von Fruchtpürees mit fruchteigenen Fruchtfasern verwendet werden.

Die mit dem erfindungsgemäßen Verfahren hergestellten Fruchtfasern weisen hohe Anteile an fruchteigenen Flavonoiden auf. Ferner besitzen die so hergestellten Fruchtfasern ein fruchttypisches Aroma, so dass bei Endprodukt auf die Zugabe weiterer geschmacksverstärkender Zusätze verzichtet werden kann.

Bei dem zuvor beschriebenen erfindungsgemäßen Verfahren werden zur Nasstrennung Dekantierzentrifugen eingesetzt. Alternativ eignen sich auch andere Vorrichtungen zur Nasstrennung, beispielsweise Separatoren und ähnliches. Das Verfahren kann batchweise, also intermittierend, oder kontinuierlich in der Anlage 10 durchgeführt werden.

## Patentansprüche

1. Verfahren zur Gewinnung von Kernen und Fruchtfasern aus Fruchttrester und/oder Maische, bei dem die Kerne von den im Fruchttrester und/oder in der Maische enthaltenen Fruchtfasern getrennt und anschließend die Fruchtfasern aus dem verbleibenden Fruchttrester- und/oder Maischerest gewonnen werden,
**dadurch gekennzeichnet,**
**dass** bei Verwendung von Fruchttrester der Fruchttrester zunächst mit einer Flüssigkeit zu einem Gemisch gegebenenfalls unter Zugabe von Maische aufgeschwemmt wird,
**dass** die Kerne anschließend durch Nasstrennung aus dem Gemisch oder direkt aus der Maische gewonnen werden und
**dass** aus dem verbleibenden Restgemisch oder der verbleibenden Restmaische die Fruchtfasern durch Nasstrennung von der Flüssigkeit getrennt werden.

2. Verfahren nach Anspruch 1, **dadurch gekennzeichnet, dass** das Gemisch und/oder das Restgemisch bzw. die Maische und/oder die Restmaische zur Nasstrennung zentrifugiert werden bzw. wird.

3. Verfahren nach Anspruch 2, **dadurch gekennzeichnet, dass** das Gemisch und/oder das Restgemisch bzw. die Maische und/oder die Restmaische in einer Dekantierzentrifuge (18, 26) zentrifugiert werden bzw. wird.

4. Verfahren nach Anspruch 1, 2 oder 3, **dadurch gekennzeichnet, dass** beim Aufschwemmen des Fruchttresters das Mischungsverhältnis zwischen dem Fruchttrester und der Flüssigkeit so eingestellt wird, dass das Mischungsverhältnis in einem Bereich von 1 : 1 bis 1 : 10 liegt.

5. Verfahren nach einem der Ansprüche 1 bis 4, **dadurch gekennzeichnet, dass** zum Aufschwemmen des Fruchttresters als Flüssigkeit Wasser, vorzugsweise entmineralisiertes Wasser, oder Fruchtsaft verwendet wird.

6. Verfahren nach einem der Ansprüche 1 bis 5, **dadurch gekennzeichnet; dass** beim Aufschwemmen des Fruchttresters dem Gemisch zum Einstellen des pH-Wertes mindestens eine organische Säure zugegeben wird.

7. Verfahren nach einem der vorhergehenden Ansprüche, **dadurch gekennzeichnet, dass** das Gemisch oder die Maische zur Vermeidung einer Sedimentation zumindest unmittelbar vor der Nasstrennung umgewälzt wird.

8. Verfahren nach einem der vorhergehenden Ansprüche, dass die aus dem Gemisch oder der Maische gewonnenen Kerne entölt werden.

9. Verfahren nach einem der vorhergehenden Ansprüche, **dadurch gekennzeichnet, dass** die aus dem Restgemisch oder der Restmaische gewonnenen Fruchtfasern ohne Trocknung einer unmittelbaren Weiterverarbeitung zugeführt werden.

10. Verfahren nach Anspruch 9, **dadurch gekennzeichnet, dass** die Fruchtfasern zur Weiterverarbeitung gemahlen werden.

11. Verfahren nach Anspruch 9 oder 10, **dadurch gekennzeichnet, dass** die gemahlenen Fruchtfasern homogenisiert werden.

12. Verfahren nach Anspruch 9, 10 oder 11, **dadurch gekennzeichnet, dass** die Fruchtfasern, vorzugsweise nach dem sie gemahlen und homogenisiert worden sind, einer Endverarbeitung zugeführt werden.

13. Endprodukt, das Fruchtfasern enthält, die durch ein Verfahren nach einem der vorhergehenden Ansprüche gewonnen worden sind, **dadurch gekennzeichnet, dass** das Endprodukt ein Faser-/Ballaststoffkonzentrat aus Früchten mit fruchteigenen Fruchtfasern, ein trüber oder blanker Fruchtsaft mit fruchteigenen Fruchtfasern, ein trübes oder blankes Fruchtsaftkonzentrat mit fruchteigenen Fruchtfasern, ein Fruchtmark mit fruchteigenen Fruchtfasern, ein Markkonzentrat mit fruchteigenen Fruchtfasern oder eine Fruchtzubereitung auf der Basis von Fruchtpürees mit fruchteigenen Fruchtfasern ist, wobei die Fruchtfasern im Wesentlichen frei von Kernen sind.

14. Verwendung des Endprodukts gemäß Anspruch 13 als Träger für lipophile Zusätze.

## Claims

1. A method for extracting pips and fruit fibres from fruit pomace and/or mash, in which the pips are separated from the fruit fibres contained in the fruit pomace and/or in the mash and then the fruit fibres are extracted from the remaining fruit pomace and/or mash residue,
**characterised in that**
when using fruit pomace, the fruit pomace is firstly macerated with a liquid to form a mixture, optionally with the addition of mash, **in that** the pips are then extracted by wet separation from the mixture or directly from the mash and **in that** the fruit fibres are separated by wet separation from the liquid from the remaining residual mixture or the remaining residual mash.

2. A method according to claim 1, **characterised in that** the mixture and/or the residual mixture or the mash and/or the residual mash is or are centrifuged for wet separation.

3. A method according to claim 2, **characterised in that** the mixture and/or the residual mixture or the mash and/or the residual mash is or are centrifuged in a decanting centrifuge (18, 26).

4. A method according to claim 1, 2 or 3, **characterised in that** when the fruit pomace is macerated, the mixing ratio between the fruit pomace and the liquid is adjusted such that the mixing ratio is in a range of 1 : 1 to 1 : 10.

5. A method according to any one of claims 1 to 4, **characterised in that** water, preferably demineralised water, or fruit juice, is used as the liquid to macerate the fruit pomace.

6. A method according to any one of claims 1 to 5, **characterised in that** at least one organic acid is added to the mixture to adjust the pH when the fruit pomace is macerated.

7. A method according to any one of the preceding claims, **characterised in that** the mixture or the mash is stirred at least directly before the wet separation to avoid sedimentation.

8. A method according to any one of the preceding claims, **characterised in that** the pips extracted from the mixture or the mash have the oil removed.

9. A method according to any one of the preceding claims, **characterised in that** the fruit fibres extracted from the residual mixture or the residual mash are supplied without drying for direct further processing.

10. A method according to claim 9, **characterised in that** the fruit fibres are ground for further processing.

11. A method according to claim 9 or claim 10, **characterised in that** the ground fruit fibres are homogenised.

12. A method according to claim 9, 10 or 11, **characterised in that** the fruit fibres are supplied for final processing, preferably after they have been ground and homogenised.

13. An end product, which contains fruit fibres, which have been extracted by a method according to any one of the preceding claims, **characterised in that** the end product is a fibre/roughage concentrate of fruits with fruit fibres particular to the fruit, an unclear or clear fruit juice with fruit fibres particular to the fruit, an unclear or clear fruit juice concentrate with fruit fibres particular to the fruit, a fruit pulp with fruit fibres particular to the fruit, a pulp concentrate with fruit fibres particular to the fruit or a fruit preparation based on fruit purees with fruit fibres particular to the fruit, the fruit fibres substantially being free of pips.

14. Use of the end product according to claim 13 as a carrier for lipophilic additives.

## Revendications

1. Procédé pour extraire des noyaux et fibres de fruits d'un marc de fruits et/ou d'un moût, dans lequel les noyaux sont séparés des fibres de fruits contenues dans le marc de fruits et/ou dans le moût, puis les fibres de fruits sont extraites du résidu de marc de fruits et/ou du résidu de moût restants, **caractérisé**
**en ce que** dans le cas de l'utilisation de marc de fruits, le marc de fruits est tout d'abord mis en suspension dans un liquide pour former un mélange, le cas échéant avec addition de moût,
**en ce que** les noyaux sont ensuite extraits du mélange par séparation par voie humide ou extraits directement du moût,
et **en ce qu'**à partir du mélange résiduel ou du moût résiduel restants, les fibres de fruits sont séparées du liquide par un processus de séparation par voie humide.

2. Procédé suivant la revendication 1, **caractérisé en ce que** le mélange et/ou le mélange résiduel ou le moût et/ou le moût résiduel est ou sont centrifugé(s) en vue de la séparation par voie humide.

3. Procédé suivant la revendication 2, **caractérisé en ce que** le mélange et/ou le mélange résiduel ou le moût et/ou le moût résiduel est ou sont centrifugé(s) dans une centrifugeuse-décanteuse (18, 26).

4. Procédé suivant la revendication 1, 2 ou 3,
**caractérisé en ce que** le rapport de mélange entre le marc de fruits et le liquide lors de la mise en suspension du marc de fruits est ajusté de manière que le rapport de mélange se situe dans une plage de 1 : 1 à 1 : 10.

5. Procédé suivant l'une des revendications 1 à 4, **caractérisé en ce que** de l'eau, avantageusement de l'eau déminéralisée, ou du jus de fruit est utilisé comme liquide de mise en suspension du marc de fruits.

6. Procédé suivant l'une des revendications 1 à 5, **caractérisé en ce qu'**au moins un acide organique est ajouté au mélange lors de la mise en suspension pour ajuster la valeur du pH.

7. Procédé suivant l'une des revendications précédentes, **caractérisé en ce que** le mélange ou le moût est mis en circulation au moins juste avant la séparation par voie humide pour éviter une sédimentation.

8. Procédé suivant l'une des revendications précédentes, **caractérisé en ce que** les noyaux extraits du mélange ou du moût sont déshuilés.

9. Procédé suivant l'une des revendications précédentes, **caractérisé en ce que** les fibres de fruits extraites du mélange résiduel ou du moût résiduel sont envoyées directement à un traitement ultérieur sans être séchées.

10. Procédé suivant la revendication 9, **caractérisé en ce que** les fibres de fruits sont broyées en vue de leur traitement ultérieur.

11. Procédé suivant la revendication 9 ou 10,
**caractérisé en ce que** les fibres de fruits broyées sont homogénéisées.

12. Procédé suivant la revendication 9, 10 ou 11, **caractérisé en ce que** les fibres de fruits sont envoyées à un traitement final, avantageusement après avoir été broyées et homogénéisées.

13. Produit fini contenant des fibres de fruits qui ont été extraites par un procédé selon l'une des revendications précédentes, **caractérisé en ce que** le produit fini est un concentré de fibres/substances inertes de fruits contenant les propres fibres de ces fruits, un jus de fruit trouble ou clair contenant les propres fibres du fruit, un concentré de jus de fruit contenant les propres fibres du fruit, de la pulpe de fruit contenant les propres fibres du fruit, un concentré de pulpe contenant les propres fibres du fruit ou une préparation à base de purée de fruits contenant les propres fibres des fruits, les fibres de fruits étant principalement débarrassées de noyaux.

14. Utilisation du produit fini suivant la revendication 13, comme support pour des additifs lipophiles.
